(19) Europäisches Patentamt
European Patent Office
Office européen des brevets

(11) **EP 4 484 392 A1**

(12) **EUROPEAN PATENT APPLICATION**
published in accordance with Art. 153(4) EPC

(43) Date of publication:
**01.01.2025 Bulletin 2025/01**

(21) Application number: **23810974.8**

(22) Date of filing: **19.05.2023**

(51) International Patent Classification (IPC):
*C03C 11/00* (2006.01)        *C03B 19/06* (2006.01)
*C04B 38/06* (2006.01)        *A24F 40/70* (2020.01)

(52) Cooperative Patent Classification (CPC):
Y02P 40/57

(86) International application number:
**PCT/CN2023/095363**

(87) International publication number:
**WO 2023/226903 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.05.2022 CN 202210579323**

(71) Applicant: **Shenzhen Smoore Technology Limited
Shenzhen, Guangdong 518102 (CN)**

(72) Inventors:
• **YANG, Congming
  Shenzhen, Guangdong 518102 (CN)**

• **LONG, Jicai
  Shenzhen, Guangdong 518102 (CN)**
• **ZHOU, Qianyuan
  Shenzhen, Guangdong 518102 (CN)**
• **FU, Lei
  Shenzhen, Guangdong 518102 (CN)**
• **ZHOU, Hongming
  Shenzhen, Guangdong 518102 (CN)**

(74) Representative: **Westphal, Mussgnug & Partner,
Patentanwälte mbB
Werinherstraße 79
81541 München (DE)**

(54) **POROUS GLASS ATOMIZATION CORE, PREPARATION METHOD THEREFOR, AND ELECTRONIC ATOMIZER**

(57) This application relates to the technical field of electronic atomization devices, and in particular to a porous glass atomization core, a production method therefor and an electronic atomizer. In the production method for the porous glass atomization core, the porous glass is produced with glass powder as a main component, and a fiber component as a framework, preventing the pore structure collapse caused by the softening and flow of glass, and ensuring the pore structure of the porous glass to a great extent. The produced porous glass has the characteristics of high porosity (50-80%), appropriate pore size (10-200 μm), smooth and continuous internal surface, which can reduce the adsorption of low-viscosity components in atomizing mediums by a porous substrate, and ensure the full atomization of atomizing medium components; and as a substrate of a heating unit in the electronic atomizer, the porous glass improves the taste and aroma reduction degree of the electronic atomizer. By specifically limiting the diameter and aspect ratio of the fiber component, smoke attenua- tion and carbon deposition during the smoking process can also be avoided.

FIG. 1

**Description**

CROSS-REFERENCE TO PRIOR APPLICATION

This application claims priority to Chinese Patent Application No. 202210579323.5, entitled "porous glass, a production method therefor and application thereof" filed with the China National Intellectual Property Administration on May 25, 2022, which is incorporated herein by reference in its entirety.

FIELD

This application relates to the technical field of electronic atomization devices, and in particular to a porous glass atomization core, a production method therefor, and an electronic atomizer.

BACKGROUND

An electronic atomizer is a product that converts an atomizing medium and the like into vapor by atomization and other means, so that users inhale the vapor. An atomization core is a core component of the electronic atomizer, and plays a vital role in the taste, aerosol volume and other performance of the electronic atomizer.

Most of closed electronic atomizers use porous ceramics as atomization cores. Most of porous ceramics are produced by accumulation of particles prepared by using diatomaceous earth, silicon oxide, alumina, and the like as raw materials, and adding glass powder, pore-forming agents, and the like through sintering. Porous ceramics are used as atomization cores, which has the characteristics of good uniformity, long service life, delicate taste and high degree of mechanization. However, porous ceramic heating elements have a certain proportion of semi-closed pores and micropores, which can easily cause the adsorption of low-viscosity components in the atomizing mediums, thereby affecting the smoking taste and aroma reduction degree. At the same time, the porous ceramic heating element has a rough microscopic surface and relatively low continuity, and cannot be used with a thin-film heating film.

Compared with porous ceramics, porous glass has the characteristics of smooth and continuous microstructure, and relatively low proportion of micro-nanopores, and is not easy to adsorb the atomizing mediums. At present, the porous glass is generally produced by using a pore-forming agent method, a foaming method or a sponge impregnation method. According to the foaming method, it is difficult to accurately control the size of porous glass produced by glass softening, foaming and annealing, and the closed-pore rate is relatively high. According to the sponge impregnation method, the porous glass is produced by using sponge as a framework, debinding and sintering, however, the porous glass has the problems of too large pore size (greater than 300 $\mu$m), uneven pore distribution and easy collapse during sintering, and is unsuitable as the atomization core. The pore structure of samples produced directly by the pore-forming agent method is prone to collapse after glass reaches the softening point, and the requirements of both microstructural continuity and high porosity cannot be ensured at the same time.

Therefore, an atomization core with porous glass as a substrate needs to be developed.

SUMMARY

Therefore, the technical problem to be solved by this application is to overcome the defects of porous glass atomization cores in the prior art, such as low porosity and easy collapse of the pore structure, thereby providing a porous glass atomization core and a production method therefor and an electronic atomizer.

To achieve the above objective, this application provides the following technical schemes.

This application provides a production method for a porous glass atomization core, including the following steps:

S1, producing porous glass by adopting the following schemes:

scheme one: a production method for the porous glass including: mixing glass powder, a fiber component, a pore-forming agent and an additive phase to produce a green body, and performing debinding and sintering to obtain the porous glass;

or scheme two: a production method for the porous glass including: mixing glass powder, a fiber component, and a pore-forming agent to produce a green body, and performing debinding and sintering to obtain the porous glass;

S2, using the porous glass as a substrate, and arranging a heating unit on the substrate.

Optionally, the fiber component has a diameter of 3-30 $\mu$m and a length of 20-500 $\mu$m;

optionally, the fiber component has a diameter of 10-25 μm and a length of 20-150 μm.

Optionally, the aspect ratio of the fiber component is 1-10; optionally, the aspect ratio of fibers with a length of 50-150 μm is 2-5;

and/or, the proportion of fibers with a fiber length of 50 μm or more in the fiber component is 25%; optionally, the proportion is 40% or more; further optionally, the proportion is 40-100%.

Optionally, in scheme one, raw materials include 15-50% of fiber component by the total mass of the raw materials;

optionally, by the total mass of the raw materials, the raw materials include the following mass percent of components: 20-70% of glass powder; 15-50% of fiber component; 10-70% of pore-forming agent; 0-50% of additive phase.

Further optionally, the mass percent of the additive phase is 1-50%;

or, in scheme two,

by the total mass of the glass powder and the fiber component, the proportion of the glass powder is 40-62%, and the proportion of the fiber component is 38-60%;

and/or, the amount of the pore-forming agent used is 0.3-2.5 times the total mass of the glass powder and the fiber component.

Optionally, in scheme one and scheme two, any one of a casting process, an injection molding process, a dry pressing process and a gel casting process is independently selected to produce the green body;

the above processes for producing green bodies are all known in the art, and corresponding processing aids may be added and used according to different selected processes. Typically, but not limiting, the injection molding process substantially includes the following steps: performing airtight mixing on mixed materials and injection molding additives (paraffin, polyethylene, a dispersant, and the like) in an internal mixer at a high temperature until the mixed materials and the additives are uniform, and then producing a green body of a specified shape by injection molding of the materials.

And/or, the debinding temperature is 200-800°C, and the debinding time is 5-50h. Optionally, the debinding temperature is 200-350°C. Generally, a better debinding process can be obtained based on a thermogravimetric curve of the pore-forming agent.

And/or, the sintering temperature is 900-1250°C or 1180-1320°C, and the sintering time is 10-180min.

Optionally, the production method for the porous glass meets at least one of the following (1) to (5):

(1) the softening temperature of the glass powder is 600-1200°C; if the softening point of the selected fiber raw material is the sintering temperature or above in the production method, the selected fiber raw materials can pact as a framework;

(2) the particle size of the glass powder is 10 μm or less, optionally, the particle size is 3000 meshes or less;

(3) the fiber component is at least one of silicon carbide fiber, silicon nitride fiber, aluminum silicate fiber, quartz fiber, mullite fiber, alumina fiber, hydroxyapatite fiber, and zirconium oxide fiber;

(4) the pore-forming agent is one or a mixture of carbon powder, polystyrene, polymethyl methacrylate, polylactic acid, polyvinyl alcohol, polyethylene terephthalate, engineering plastics, starch, cellulose, sawdust, and graphite powder which can be decomposed, volatilized or burned at high temperatures;

(5) the particle size of the pore-forming agent is 10-300 μm, optionally, the average particle size of the pore-forming agent is 70-90 μm, for example, about 80 μm. The porous glass material with better communication can be obtained by adjusting the addition ratio of pore-forming agents with different diameters.

Optionally, the heating unit in step S2 is a heating wire, a heating net or a heating film;

optionally, the heating wire or heating net needs to be embedded in the green body forming process, and is then sintered together with a formed body to obtain a porous glass atomization core;

optionally, as for the heating film, a thick film resistive heating film is printed by screen printing, or a thin film resistive heating film is formed by spraying or magnetron sputtering, the pattern of the heating film is designed, and then the porous glass atomization core is obtained through a sintering step.

This application further provides a porous glass atomization core, using the porous glass as a substrate of the porous glass atomization core, on which the heating unit is arranged.

In scheme a, the porosity of the porous glass is 50-70%, and the average pore size is 10-200 $\mu$m; or, in scheme b, the porosity of the porous glass is 65-80%, and the average pore size is 10-200 $\mu$m, optionally, the average pore size is 70-90 $\mu$m.

Optionally, the porous glass in the scheme a is produced by the production method of the above-mentioned scheme one;

or the porous glass in the scheme b is produced by the production method of the above-mentioned scheme two.

Optionally, the porous glass in the scheme b includes a framework and multi-directional communication pores, the framework includes a fiber body and a glass body surrounding the fiber body, the average pore size of the multi-directional communication pores is 10-200 $\mu$m, and optionally, the average pore size is 70-90 $\mu$m. The pore size is generally determined by the size of the pore-forming agent and is comparable to the size of the pore-forming agent.

Optionally, the fiber body has a diameter of 3-30 $\mu$m and a length of 20-500 $\mu$m;

optionally, the fiber body has a diameter of 10-25 $\mu$m and a length of 20-150 $\mu$m.

Optionally, the aspect ratio of the fiber body is 1-10, optionally, the aspect ratio of fibers with a length of 50-150 $\mu$m in the fiber body is 2-5;

and/or, the proportion of fibers with a length of 50 $\mu$m or more in the fiber body is 25% or more, optionally, the proportion is 40% or more.

In the porous glass atomization core provided by this application, the porous glass substrate includes a framework and a multi-directional communication pores. The glass powder acts as an adhesive, and glass serves as a framework bonding point to bond with effective fibers coated or not coated with glass on the surfaces to form a three-dimensional structure; or glass-coated fiber particles become a framework bonding point to bond with the effective fibers coated or not coated with glass on the surfaces to form a three-dimensional structure. The surface of the formed framework structure (the surface of the porous glass material and internal pore walls) is smooth and continuous, and has no microporous secondary structure.

In this application, if the diameter and length of the fiber component are not within the above ranges, the fiber component needs to be preprocessed to the above sizes.

Typically, but not limiting, glass powder and fiber component pore-forming agents with specific diameters and lengths can be obtained by ball milling and sieving. Specifically, the fiber component can be obtained by the following method:

cutting and sieving fiber raw materials first; weighting the cut and sieved fibers, a dispersing agent and a solvent, and performing high-energy ball milling; drying milled fibers, which are then sieved, then taking out the fibers under the sieve, and observing the diameter and length of the fibers under the sieve by a scanning electron microscope (SEM). The length and diameter of the fibers are controlled by process parameters, where the mesh size of the sieve for sieving the cut fibers is 10-40 meshes.

The dispersing agent include but is not limited to: stearic acid, oleic acid, paraffin, polyethylene glycol, and the like.

The solvent includes but is not limited to: water, alcohol, ethyl acetate and the like.

The high-energy ball milling adopts planetary ball milling, the ball milling speed is 100-500 r/min, and the ball milling time is 0.5-5 h.

Typically, but not limiting, the mesh size of the sieve for sieving the dried fibers is 40-100 meshes (sieving only makes the fiber dispersion more uniform, the actual fiber mesh size is much lower than 40-100 meshes, and the laser particle size test result is about 15-100 $\mu$m).

According to the length and function of the fibers, the fibers can be divided into fiber particles less than 50 $\mu$m and effective fibers with a length of 50-150 $\mu$m for supporting, and the aspect ratio of the effective fibers is 2 or more. Preferably, the length of the effective fibers is 50-100 $\mu$m, and the aspect ratio of the effective fibers is 2-5; and the effective fibers are 25% or more of the total fiber mass. Preferably, the effective fibers are 40% or more of the total fiber mass.

Typically, but not limiting, in order to obtain glass powder with uniform particle size, commercially available glass powder can be ball-milled for 3-5 hours at a speed of 200-500 r/min by using a high-energy planetary ball mill with ethanol as a solvent, and then dried and sieved for use.

For the fiber component, generally, commercially available 2-5 mm chopped fibers are crushed to 0.5 mm or less by a crusher first, and then undergo high-energy planetary ball milling for 2-12 hours with ethanol as a solvent and stearic acid as a grinding aid at a ball milling speed of 100-400 r/min, preferably, at a ball milling speed of 300 r/min; and the ball-milled fibers are washed with ethanol, dried and sieved with a 100-mesh sieve to obtain target fibers. The proportion of the effective fibers to the total fiber mass can be changed by adjusting the ball milling time; generally, at a ball milling speed of 300 r/min, after 6 hours of ball milling, the effective fibers account for about 40% of the total fiber mass; after 8 hours of ball milling, the effective fibers account for about 30% of the total fiber mass; and after 12 hours or more of ball milling, the effective fiber accounts for about 10% or less of the total fiber mass. The grinding aid may also be oleic acid, paraffin, polyethylene glycol, and the like. The solvent may also be water or ethyl acetate, etc.

This application further provides an electronic atomizer, which includes the porous glass atomization core.

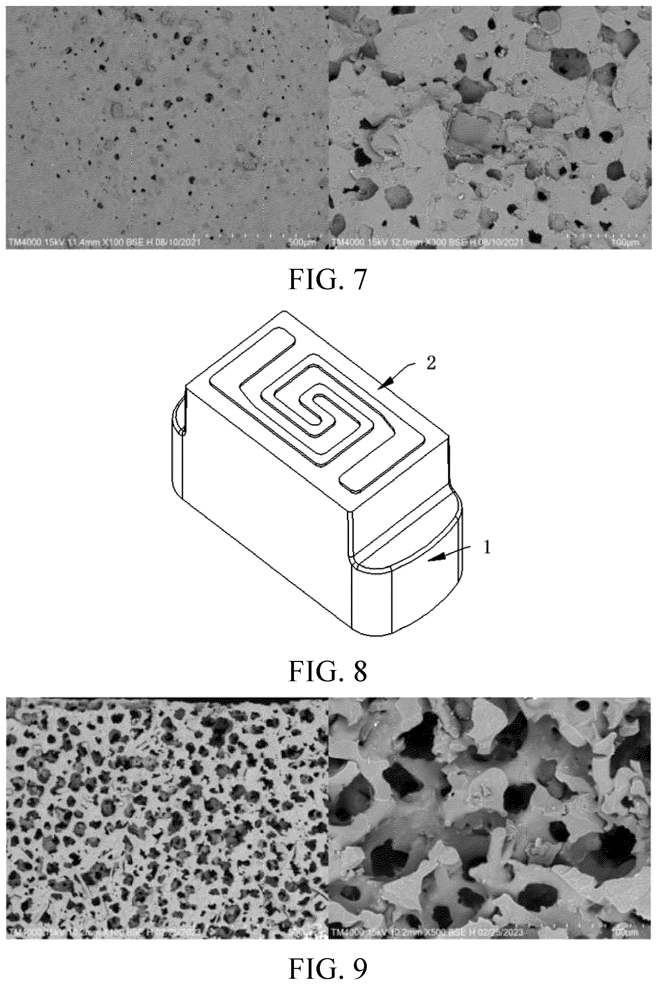

Typically, but not limiting, as shown in FIG. 8, the porous glass 1 is used as the substrate of the atomization core, a heating unit 2 is arranged on the substrate, and the heating unit is a heating wire, a heating net or a heating film. The heating wire or the heating net needs to be embedded in the green body forming process, and is then sintered together with a formed body to obtain the porous glass atomization core. When the heating film is adopted, a thick film resistive heating film may be printed on the porous glass substrate by screen printing, or a thin film resistive heating film may be formed by spraying or magnetron sputtering, the pattern of the heating film is designed, and then the porous glass atomization core can be obtained through a sintering step.

Typically, but not limiting, the thick film resistive heating film is produced by a screen printing technology. The thick film includes main components such as nickel-based alloys, iron-based alloys, silver alloys, titanium alloys, aluminum alloys, stainless steel, and the like, and contains elements such as Fe, Cr, Ni, Ti, Pa, Pt, Al, Mo, Si, Ag, and the like. The protruding thickness of the thick film is 11-100 $\mu$m, the infiltration thickness is 10-100 $\mu$m, the line width is 250-450 $\mu$m, the line spacing is 300-900 $\mu$m, and the patterns used are S, M, $\Omega$, and the like. The sintering temperature of the heating film is 700-1200°C, and the sintering time is 0.5-3 h.

Typically, but not limiting, the thin film resistive heating film is produced by spraying or magnetron sputtering. The thin film includes main components such as nickel-based alloys, silver alloys, titanium alloys, aluminum alloys, stainless steel and the like, and contains elements such as Fe, Cr, Ni, Ti, Pa, Pt, Al, Mo, Si, Ag, and the like. The protruding thickness of the thin film is 0.5-5 $\mu$m.

For example, a porous glass atomization core produced by sintering a porous glass material printed film has a heating unit that is a porous heating film. The porous heating film includes a portion higher than the surface of the porous glass substrate and a portion penetrating into the porous glass substrate. The portion higher than the surface of the porous glass substrate is of a porous structure with a pore size of 5-30 $\mu$m, pores are communication with each other and with substrate pores, and the height is 30-100 $\mu$m, preferably about 60 $\mu$m; the heating film of the portion penetrating into the porous glass substrate has a maximum penetration thickness of about 170 $\mu$m, and is embedded in porous channels of the porous substrate, so that the entire porous heating film is firmly combined with the porous glass substrate. The resistance of the heating film is 0.8-1.2 ohms.

The technical solution of this application has the following advantages:
according to the porous glass atomization core provided by this application, the porous glass is used as the substrate; the heating unit is arranged on the substrate; and the porous glass has a porosity of 50-80% and a pore size of 10-200 $\mu$m. Compared with porous ceramics, the porous glass has a smooth and continuous surface, which can be well adapted to the thin-film heating film and improve the stability of the thin-film heating film. According to this application, the porosity and pore size of the porous glass are limited, and thus the adsorption of low-viscosity components in the atomizing medium by the porous glass substrate can be reduced, and the taste and aroma reduction degree of the electronic atomizer are improved by using the porous glass as the substrate of the heating unit in the atomization core.

The porosity of the porous glass for the porous glass atomization core provided by this application is 65-80%, and the average pore size is 10-200 $\mu$m, optionally, the average pore size is 70-90 $\mu$m. Generally, the porous glass and the porous ceramics are used as the substrate of the atomization core to store and transfer an atomization liquid medium. When the pore size of the substrate is relatively small, the atomization liquid medium passes slowly, which can easily lead to insufficient supply of the atomization liquid medium (e-liquid) and produce a burnt taste, and the like; and when the pore size of the substrate is too large, the porous substrate has poor liquid locking ability and leakage is likely to occur during the smoking process. The porous glass material provided by this application has a uniform pore size distribution and good communication between pores. The pores formed by mutually connect structures can be connected with multiple surrounding pores to form a multi-directional communication pore structure. The smooth porous pore walls reduce the viscous resistance when atomization substrates such as e-liquid pass through. The porous glass substrate has a large e-liquid storage capacity, a small tortuosity, and a fast e-liquid guiding rate. Compared with commercially available porous ceramic substrates, the e-liquid guiding rate of the porous glass substrate can be increased by 20% or more.

According to the production method for the porous glass atomization core provided by this application, by further limiting the diameter, length, aspect ratio and effective fiber proportion of the fiber component in the porous glass production process, the diameter, length, aspect ratio and the like of the fiber affect the porosity and strength of the porous glass substrate and the size of the pores; generally, an increase in the fiber diameter can reduce the porosity of the substrate; if the fiber diameter is too small, the fibers cannot play a supporting role, thereby resulting in the reduction of the strength of the substrate; if the fiber length is too large, it is easy to cause fiber bending in the substrate and incomplete stress release, which will also lead to low substrate strength, and the stress release during subsequent sintering and use will causes product failure; and if there are too few effective fibers, the substrate is not easily supported, and the porosity of the substrate is reduced.

According to the production method for the porous glass atomization core provided by this application, by limiting the debinding temperature and sintering temperature in the production process of the porous glass, the debinding and sintering process can significantly affect the pore size, pores and strength of the porous substrate; generally, the debinding temperature can be selected through the thermodynamic properties of additives (pore-forming agents, auxiliaries, and the like), so that the additives in the green body can be slowly discharged in the debinding process; if the debinding time is too short, the product quality will be affected, and the product will bubble or crack; and if the debinding time is too long, the production efficiency will be affected. Generally, the sintering temperature and time also affect the final performance of the product. According to this application, the sintering temperature and sintering time are set according to the softening point of selected glass materials. Too high sintering temperature will cause the product to collapse during sintering, while too low sintering temperature will cause incomplete melting of glass, resulting in accumulation of glass powder in pores and low sample strength.

The porous glass substrate of the porous glass atomization core provided by this application includes the following mass percent of components by the total mass of the raw materials: 20-80% of glass powder; 5-50% of fiber component; 10-70% of pore-forming agent; and 0-50% of additive phase. According to this application, with the glass powder as the main component and the fiber component as the framework, the pore structure collapse caused by the softening and flow of glass is prevented, and the pore structure of the porous glass is guaranteed to a great extent. The produced porous glass has the characteristics of high porosity (50-80%), appropriate pore size (10-200 $\mu$m), and smooth and continuous internal surface, which can reduce the adsorption of low-viscosity components in atomizing mediums by the porous substrate, ensure the full atomization of atomizing medium components; and as the substrate of the heating element in the atomization core, the porous glass improves the taste and aroma reduction degree of the electronic atomizer. The production method for the porous glass provided by this application can also reduce the addition of harmful substances and improve the safety performance of the product by limiting the raw material components.

The porous glass atomization core provided by this application has a through, smooth and continuous pore structure. Compared with the porous ceramic heating core, the porous glass atomization core has smaller e-liquid guiding resistance and faster e-liquid guiding rate, thereby ensuring sufficient e-liquid supply during the atomization process, improving the atomization capability of the atomization core, and increasing the aerosol amount and nicotine satisfaction. At the same time, attribute to the rapid e-liquid supply capability, the atomization temperature is relatively low, the temperature is uniform during the atomization process, there is no local high-temperature atomization point, and harmful substances such as aldehydes and ketones in flue gas generated by excessively high atomization temperature are reduced, thereby improving the product safety; and the same time, the occurrence of carbon deposition, scorching and other failures during product smoking is reduced.

BRIEF DESCRIPTION OF THE DRAWINGS

To describe specific embodiments of this application or the technical solutions in the prior art more clearly, the accompanying drawings required for describing the embodiments or the prior art are briefly described below. Apparently, the accompanying drawings in the following description show some embodiments of this application, and a person of ordinary skill in the art may still derive other drawings from these accompanying drawings without creative efforts.

FIG. 1 is a diagram showing the surface (left) and cross-section (right) of porous glass produced in Example 1 of this application;

FIG. 2 shows morphologies of the surface (left) and cross-section (right) of porous glass produced in Example 2 of this application;

FIG. 3 shows morphologies of the surface (left) and cross-section (right) of porous glass produced in Example 3 of this application;

FIG. 4 shows morphologies of the surface (left) and cross-section (right) of porous glass produced in Example 4 of this application;

FIG. 5 shows morphologies of the surface (left) and cross-section (right) of porous glass produced in Example 5 of this application;

FIG. 6 shows morphologies of the surface (left) and cross-section (right) of porous glass produced in Example 6 of this application;

FIG. 7 shows morphologies of the surface (left) and cross-section (right) of porous glass produced in Comparative Example 1 of this application;

FIG. 8 shows a schematic structural diagram of an atomization core provided by this application;

FIG. 9 shows morphologies of the surface (left) and cross-section (right) of porous glass produced in Example 7 of this application;

FIG. 10 shows a micro-morphology of the surface of porous glass produced in Example 8 of this application;

FIG. 11 shows a micro-morphology of the surface of porous glass produced in Example 9 of this application;

FIG. 12 shows a micro-morphology of the surface of porous glass produced in Example 10 of this application;

FIG. 13 shows a micro-morphology of the surface of porous glass produced in Comparative Example 2 of this application;

FIG. 14 shows a comparison curve of smoke volume during a smoking process between Example 7 of this application and a commercially available ceramic heating element;

FIG. 15 shows a comparison diagram of carbon deposition between Example 7 of this application and a commercially available ceramic heating element; and

FIG. 16 shows an appearance morphology (left) and a micro-morphology (right) of the atomization core provided by this application.

List of Reference Numerals:
1. Porous glass; and 2. Heating unit.

DETAILED DESCRIPTION

The following examples are provided for a better understanding of this application, but are not limited to the best implementation described, and do not limit the content and protection scope of this application. Any product identical or similar to this application obtained by anyone under the inspiration of this application or by combining the features of this application with other prior arts shall fall within the protection scope of this application.
If no specific experimental steps or conditions are specified in the examples, the experiments can be carried out according to the conventional experimental steps or conditions described in the literature in the art. Reagents or instruments used without indicating manufacturers are all conventional reagents that can be purchased from the market.

EXAMPLE 1

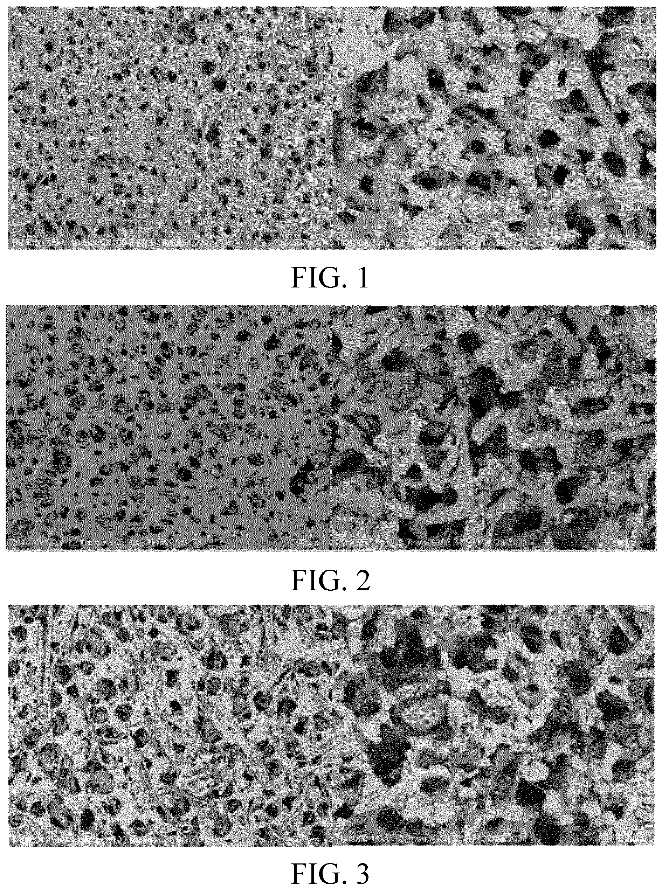

The present example provides a porous glass atomization core, a production method of which includes the following steps:
Mullite fibers are cut first, the cut mullite fibers are sieved with a 20-mesh sieve, 100 g of sieved mullite fibers, 5 g of stearic acid, and 100 g of alcohol with a volume concentration of 100% are weighed, and planetary ball milling is performed, where the ball-to-material ratio is 3: 1, the ball milling speed is 300 r/min, and the ball milling time is 30 min. The milled mullite fibers are dried in an oven at the temperature of 100°C, and then the fibers are sieved by using a 40-mesh sieve.
35 g of 3000-mesh glass powder (softening temperature 1080°C, the same below), 40 g of 50 $\mu$m PMMA pore-forming agent, and 25 g of ball-milled and sieved mullite fibers are weighed according to mass, and mixed for 2 h by using a three-dimensional mixer. A green body is produced by injection molding.
The green body debinding process is as follows: debinding is performed in this temperature range: raising the room temperature to 200°C at a uniform speed for 3 hours, and keeping the temperature at 200°C for 3 hours; raising the temperature to 250°C from 200°C at a uniform speed for 3 hours, and keeping the temperature at 250°C for 3 hours; raising the temperature to 300°C from 250°C at a uniform speed for 3 hours, and keeping the temperature at 300°C for 3 hours; raising the temperature to 350°C from 300°C at a uniform speed for 3 hours, and keeping the temperature at 350°C for 3 hours; raising the temperature to 600°C from 350°C at a uniform speed for 4 hours, and keeping the temperature at 600°C for 2 hours. The sintering temperature is 1100°C, and the sintering time is 60 min. The size of the green body after sintering is 4x9x4.4, and the shape is shown in FIG. 8. The pore structure of the obtained porous glass is shown in FIG. 1.
A thick film resistive heating film is printed on the porous glass substrate by screen printing, using nickel-based alloy (specifically includes elements such as nickel, iron, chromium, copper and molybdenum). The protruding thickness of the thick film is about 60 $\mu$m, and the infiltration thickness is about 30 $\mu$m. The pattern is shown in FIG. 8. The line width is

300 μm, the line spacing is 600 μm, the sintering temperature is 1000°C, and the time is 30 min. In this way, the atomization core is obtained.

EXAMPLE 2

The present example provides a porous glass atomization core, a production method of which includes the following steps:
alumina fibers are cut first, the cut alumina fibers are sieved with a 10-mesh sieve, 100 g of sieved alumina fibers, 3 g of stearic acid, and 100 g of alcohol with a volume concentration of 100% are weighed, and planetary ball milling is performed, where the ball-to-material ratio is 6: 1, the ball milling speed is 400 r/min, and the ball milling time is 60 min. The milled alumina fibers are dried in an oven at the temperature of 100°C, and then the fibers are sieved by using a 40-mesh sieve.
35 g of 3000-mesh glass powder, 40 g of 100 μm ASA pore-forming agent, and 25 g of ball-milled and sieved alumina fibers are weighed according to mass, and mixed for 3 h by using a three-dimensional mixer. A green body is produced by an injection molding process.
The green body debinding process is as follows: debinding is performed in this temperature range: raising the room temperature to 200°C at a uniform speed for 4 hours, and keeping the temperature at 200°C for 4 hours; raising the temperature to 250°C from 200°C at a uniform speed for 4 hours, and keeping the temperature at 250°C for 4 hours; raising the temperature to 300°C from 250°C at a uniform speed for 4 hours, and keeping the temperature at 300°C for 4 hours; raising the temperature to 350°C from 300°C at a uniform speed for 4 hours, and keeping the temperature at 350°C for 4 hours; raising the temperature to 700°C from 350°C at a uniform speed for 6 hours, and keeping the temperature at 700°C for 2 hours. The sintering temperature is 1 100°C, and the sintering time is 30 min. The size of the green body after sintering is 4x9x4.4, and the shape is shown in FIG. 8. The pore structure of the obtained porous glass is shown in FIG. 2.
A thick film resistive heating film is printed on the porous glass substrate by screen printing, using nickel-based alloy (specifically includes elements such as nickel, iron, chromium, copper and molybdenum). The protruding thickness of the thick film is about 60 μm, and the infiltration thickness is about 30 μm. The pattern is shown in FIG. 8. The line width is 300 μm, the line spacing is 600 μm, the sintering temperature is 1000°C, and the time is 30 min. In this way, the atomization core is obtained.

EXAMPLE 3

The present example provides a porous glass atomization core, a production method of which includes the following steps:
Aluminum silicate fibers are cut first, the aluminum silicate fibers are sieved with a 40-mesh sieve, 100 g of sieved aluminum silicate fibers, 10 g of stearic acid, and 100 g of alcohol with a volume concentration of 100% are weighed, and planetary ball milling is performed, where the ball-to-material ratio is 5: 1, the ball milling speed is 400 r/min, and the ball milling time is 2 h. The milled aluminum silicate fibers are dried in an oven at the temperature of 100°C, and then the fibers are sieved by using a 60-mesh sieve.
35 g of 3000-mesh glass powder, 40 g of 200 μm PET pore-forming agent, and 25 g of ball-milled and sieved aluminum silicate fibers are weighed according to mass, and mixed for 3 h by using a three-dimensional mixer. A green body is produced by injection molding. The green body debinding process is as follows: raising the room temperature to 200°C at a uniform speed for 4 hours, and keeping the temperature at 200°C for 5 hours; raising the temperature to 250°C from 200°C at a uniform speed for 6 hours, and keeping the temperature at 250°C for 6 hours; raising the temperature to 300°C from 250°C at a uniform speed for 5 hours, and keeping the temperature at 300°C for 6 hours; raising the temperature to 350°C from 300°C at a uniform speed for 6 hours, and keeping the temperature at 350°C for 4 hours; raising the temperature to 700°C from 350°C at a uniform speed for 6 hours, and keeping the temperature at 700°C for 2 hours. The sintering time is 1100°C, and the sintering time is 60 min. The size of the green body after sintering is 4x9x4.4, and the shape is shown in FIG. 8. The pore structure of the obtained porous glass is shown in FIG. 3.
A thick film resistive heating film is printed on the porous glass substrate by screen printing, using nickel-based alloy (specifically includes elements such as nickel, iron, chromium, copper and molybdenum). The protruding thickness of the thick film is about 60 μm, and the infiltration thickness is about 30 μm. The pattern is shown in FIG. 8. The line width is 300 μm, the line spacing is 600 μm, the sintering temperature is 1000°C, and the time is 30 min. In this way, the atomization core is obtained.

EXAMPLE 4

The present example provides a porous glass atomization core, a production method of which includes the following steps:
Alumina fibers are cut first, the cut alumina fibers are sieved with a 10-mesh sieve, 100 g of sieved alumina fibers, 3 g of stearic acid, and 100 g of alcohol with a volume concentration of 100% are weighed, and planetary ball milling is performed, where the ball-to-material ratio is 6: 1, the ball milling speed is 400 r/min, and the ball milling time is 60 min. the milled alumina fibers are dried in an oven at the temperature of 100°C, and then the fibers are sieved by using a 40-mesh sieve.

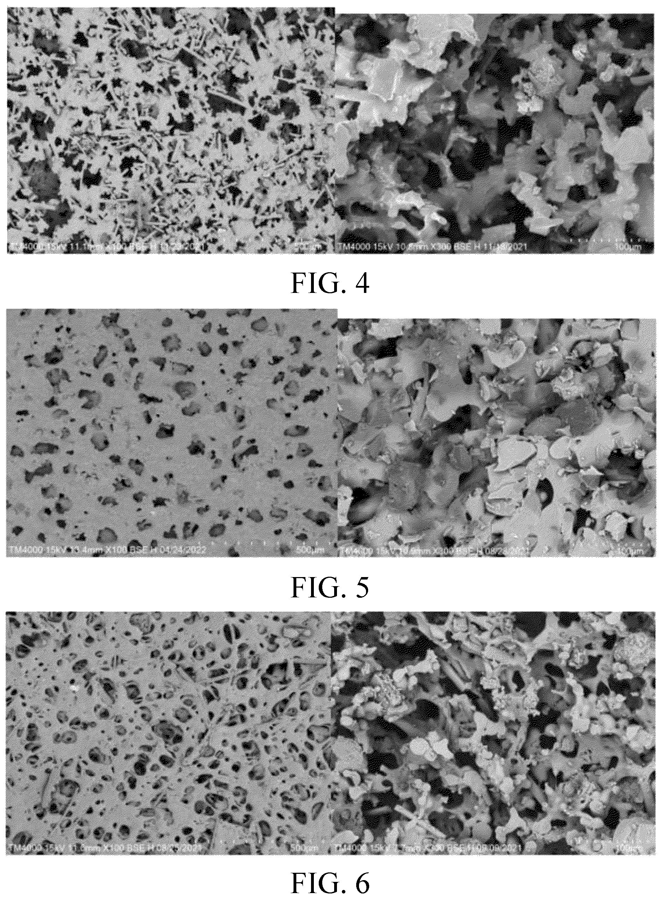

20 g of 3000-mesh glass powder, 30 g of 100 $\mu$m ASA pore-forming agent, and 50 g of ball-milled and sieved alumina fibers are weighed according to mass, and mixed for 3 h by using a three-dimensional mixer. A green body is produced by an injection molding process. The green body debinding process is as follows: debinding is performed in this temperature range: raising the room temperature to 200°C at a uniform speed for 4 hours, and keeping the temperature at 200°C for 4 hours; raising the temperature to 250°C from 200°C at a uniform speed for 4 hours, and keeping the temperature at 250°C for 4 hours; raising the temperature to 300°C from 250°C at a uniform speed for 4 hours, and keeping the temperature at 300°C for 4 hours; raising the temperature to 350°C from 300°C at a uniform speed for 4 hours, and keeping the temperature at 350°C for 4 hours; raising the temperature to 700°C from 350°C at a uniform speed for 6 hours, and keeping the temperature at 700°C for 2 hours. The sintering temperature is 1000°C, and the sintering time is 30 min. The size of the green body after sintering is 4x9x4.4, and the shape is shown in FIG. 8. The pore structure of the obtained porous glass is shown in FIG. 4.

A thick film resistive heating film is printed on the porous glass substrate by screen printing, using nickel-based alloy (specifically includes elements such as nickel, iron, chromium, copper and molybdenum). The protruding thickness of the thick film is about 60 $\mu$m, and the infiltration thickness is about 30 $\mu$m. The pattern is shown in FIG. 8. The line width is 300 $\mu$m, the line spacing is 600 $\mu$m, the sintering temperature is 1000°C, and the time is 30 min. In this way, the atomization core is obtained.

EXAMPLE 5

The present example provides a porous glass atomization core, a production method of which includes the following steps:

alumina fibers are cut first, the cut alumina fibers are sieved with a 10-mesh sieve, 100 g of sieved alumina fibers, 3 g of stearic acid, and 100 g of alcohol with a volume concentration of 100% are weighed, and planetary ball milling is performed, where the ball-to-material ratio is 6: 1, the ball milling speed is 400 r/min, and the ball milling time is 60 min. the milled alumina fibers are dried in an oven at the temperature of 100°C, and then the fibers are sieved by using a 40-mesh sieve.

80 g of 3000-mesh glass powder, 15 g of 100 $\mu$m ASA pore-forming agent, and 5 g of ball-milled and sieved alumina fibers are weighed according to mass, and mixed for 3 h by using a three-dimensional mixer. A green body is produced by an injection molding process.

The green body debinding process is as follows: debinding is performed in this temperature range: raising the room temperature to 200°C at a uniform speed for 4 hours, and keeping the temperature at 200°C for 4 hours; raising the temperature to 250°C from 200°C at a uniform speed for 4 hours, and keeping the temperature at 250°C for 4 hours; raising the temperature to 300°C from 250°C at a uniform speed for 4 hours, and keeping the temperature at 300°C for 4 hours; raising the temperature to 350°C from 300°C at a uniform speed for 4 hours, and keeping the temperature at 350°C for 4 hours; raising the temperature to 700°C from 350°C at a uniform speed for 6 hours, and keeping the temperature at 700°C for 2 hours. The sintering temperature is 1000°C, and the sintering time is 30 min. The size of the green body after sintering is 4x9x4.4, and the shape is shown in FIG. 8. The pore structure of the obtained porous glass is shown in FIG. 5.

A thick film resistive heating film is printed on the porous glass substrate by screen printing, using nickel-based alloy (specifically includes elements such as nickel, iron, chromium, copper and molybdenum). The protruding thickness of the thick film is about 70 $\mu$m, and the infiltration thickness is about 20 $\mu$m. The pattern is shown in FIG. 8. The line width is 300 $\mu$m, the line spacing is 600 $\mu$m, the sintering temperature is 1000°C, and the time is 30 min. In this way, the atomization core is obtained.

EXAMPLE 6

The present example provides a porous glass atomization core, a production method of which includes the following steps:

alumina fibers are cut first, the cut alumina fibers are sieved with a 10-mesh sieve, 100 g of sieved alumina fibers, 3 g of stearic acid, and 100 g of alcohol with a volume concentration of 100% are weighed, and planetary ball milling is performed, where the ball-to-material ratio is 6: 1, the ball milling speed is 400 r/min, and the ball milling time is 60 min. The milled alumina fibers are dried in an oven at the temperature of 100°C, and then the fibers are sieved by using a 40-mesh sieve.

35 g of 3000-mesh glass powder, 40 g of 100 $\mu$m ASA pore-forming agent, and 20 g of ball-milled and sieved alumina fibers are weighed according to mass, 5 g of zeolite powder of about 30 $\mu$m is added, and mixed for 3 h by using a three-dimensional mixer. A green body is produced by an injection molding process.

The green body debinding process is as follows: debinding is performed in this temperature range: raising the room temperature to 200°C at a uniform speed for 4 hours, and keeping the temperature at 200°C for 4 hours; raising the temperature to 250°C from 200°C at a uniform speed for 4 hours, and keeping the temperature at 250°C for 4 hours; raising the temperature to 300°C from 250°C at a uniform speed for 4 hours, and keeping the temperature at 300°C for 4 hours; raising the temperature to 350°C from 300°C at a uniform speed for 4 hours, and keeping the temperature at 350°C for 4 hours; raising the temperature to 700°C from 350°C at a uniform speed for 6 hours, and keeping the temperature at 700°C for 2 hours. The sintering temperature is 1100°C, and the sintering time is 30 min. The size of the green body after sintering is 4x9x4.4, and the shape is shown in FIG. 8. The pore structure of the obtained porous glass is shown in FIG. 7.

A thick film resistive heating film is printed on the porous glass substrate by screen printing, using nickel-based alloy (specifically includes elements such as nickel, iron, chromium, copper and molybdenum). The protruding thickness of the thick film is about 60 $\mu$m, and the infiltration thickness is about 30 $\mu$m. The pattern is shown in FIG. 8. The line width is 300 $\mu$m, the line spacing is 600 $\mu$m, the sintering temperature is 1000°C, and the time is 30 min. In this way, the atomization core is obtained.

EXAMPLE 7

The present example provides a porous glass atomization core, a production method of which includes the following steps:

Raw material processing: performing ball milling on glass powder by using ethanol as a solvent in a planetary ball mill at a speed of 300 r/min for 3 hours, drying, and sieving the ball-milled glass powder to obtain glass powder with a particle size of 3-5 $\mu$m (the same below); performing planetary ball milling on crushed mullite chopped fibers for 6 hours by using stearic acid as a grinding aid and ethanol as a solvent at a speed of 300 r/min, drying after washing with ethanol, and sieving with a 100-mesh sieve to obtain fiber raw materials, where effective fibers accounts for 40% of the total fiber mass, and the aspect ratio of the effective fibers is 2-5.

Ingredient molding: preparing 48 g of glass powder, 52 g of mullite fibers and 100 g of PMMA (80 $\mu$m) pore-forming agent, mixing the materials in a three-dimensional mixer for 2 hours, adding the mixed materials into an internal mixer, and adding paraffin wax accounting for 20% of the mass of the mixed materials, polyethylene accounting for 5% of the mass of the mixed materials, and a dispersing aid (stearic acid or dibutyl phthalate, and dibutyl phthalate is used in the present example, the same below) accounting for 5% of the mass of the mixed materials, performing airtight mixing at the temperature of 180°C for 2 hours, and then producing a green body through an injection molding machine.

Debinding and sintering: raising the temperature to 200°C in 200 minutes, and then raising to 500°C at 0.5°C per minute, where a 2-hour temperature preservation time is set at 240°C, 280°C, 300°C, and 350°C respectively, then raising the temperature to 1180°C at 5°C per minute, keeping the temperature for 30 minutes, and naturally cooling to the room temperature to obtain a porous glass material with a fiber content of 52%, where the micro-morphology of the porous glass is shown in FIG. 9.

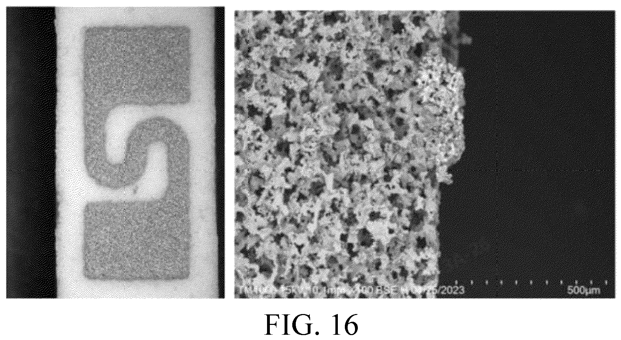

Heating film production: producing the atomization core by using a produced porous glass substrate, performing film printing and sintering by adopting ruthenium-based porous thick film heating film slurry with ruthenium dioxide (containing trace amounts of Ag, Cu, Ni, and Bi elements) as a main component to obtain a porous heating membrane, where the pore size of the porous heating film is 5-30 $\mu$m, the pores are communicated with each other and with pores of the substrate, the porous heating film is about 80 $\mu$m higher than the substrate and has a penetration thickness of about 70 $\mu$m, the pattern is shown in FIG. 16, the line width is about 330 $\mu$m, the line spacing is about 650 $\mu$m, the line is about 800 $\mu$m away from the edge of the substrate, the sintering temperature is 980°C, and the time is 30 min, and thus, the porous glass atomization core is obtained.

EXAMPLE 8

The present example provides a porous glass atomization core, a production method of which includes the following steps:

Raw material processing: the same as example 7.

Ingredient molding: preparing 40 g of glass powder, 60 g of fibers and 200 g of PMMA (80 $\mu$m) pore-forming agent, mixing the materials in a three-dimensional mixer for 2 hours, adding the mixed materials into an internal mixer, and adding paraffin wax accounting for 20% of the mass of the mixed materials, polyethylene accounting for 5% of the mass of the mixed materials, and a dispersing aid accounting for 5% of the mass of the mixed materials, performing airtight mixing at the temperature of 180°C for 2 hours, and then producing a green body through an injection molding machine.

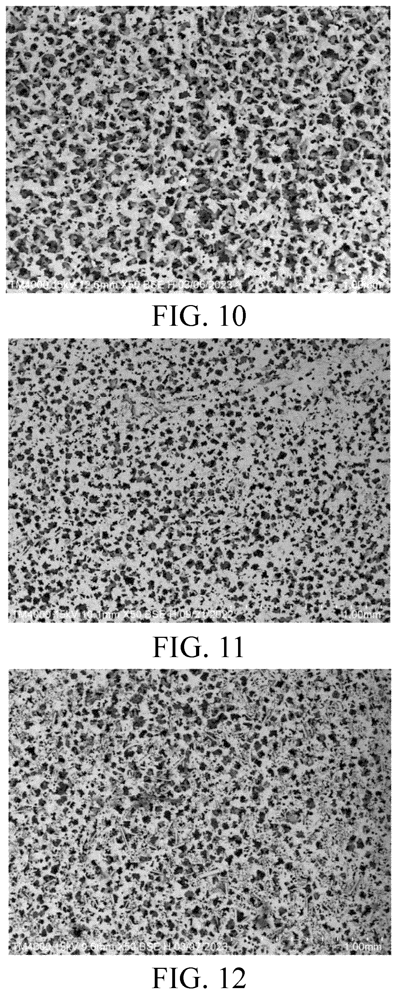

Debinding and sintering: raising the temperature to 200°C in 200 minutes, and then raising to 500°C at 0.5°C per minute, where a 2-hour temperature preservation time is set at 240°C, 280°C, 300°C, and 350°C respectively, then raising the temperature to 1220°C at 5°C per minute, keeping the temperature for 30 minutes, and naturally cooling to the room temperature to obtain the porous glass material with a fiber content of 60%, where the micro-morphology of the porous glass substrate is shown in FIG. 10.

The production method for the heating film is the same as Example 7.

EXAMPLE 9

The present example provides a porous glass atomization core, a production method of which includes the following steps:

Raw material processing: performing ball milling on glass powder by using ethanol as a solvent in a planetary ball mill at a speed of 300 r/min for 3 hours, drying, and sieving the ball-milled glass powder to obtain glass powder with a particle size of 3-5 μm; performing planetary ball milling on crushed mullite chopped fibers for 8 hours by using stearic acid as a grinding aid and ethanol as a solvent at a speed of 300 r/min, drying after washing with ethanol, and sieving with a 100-mesh sieve to obtain fiber raw materials, where effective fibers accounts for 25% of the total fiber mass, and the aspect ratio of the effective fibers is 2-5.

Ingredient molding: preparing 62 g of glass powder, 38 g of mullite fibers and 240 g of PMMA (80 μm) pore-forming agent, mixing the materials in a three-dimensional mixer for 2 hours, adding the mixed materials into an internal mixer, and adding paraffin wax accounting for 20% of the mass of the mixed materials, polyethylene accounting for 5% of the mass of the mixed materials, and a dispersing aid accounting for 5% of the mass of the mixed materials, performing airtight mixing at the temperature of 180°C for 2 hours, and then producing the green body through the injection molding machine.

Debinding and sintering: raising the temperature to 200°C in 200 minutes, and then raising to 500°C at 0.5°C per minute, where a 2-hour temperature preservation time is set at 240°C, 280°C, 300°C, and 350°C respectively, then raising the temperature to 1200°C at 5°C per minute, keeping the temperature for 30 minutes, and naturally cooling to the room temperature to obtain a porous glass material with a fiber content of 38%, where the micro-morphology of the porous glass is shown in FIG. 11.

The production method for the heating film is the same as Example 7.

EXAMPLE 10

The present example provides a porous glass atomization core, a production method of which includes the following steps:

Raw material processing: performing ball milling on glass powder by using ethanol as a solvent in a planetary ball mill at a speed of 300 r/min for 3 hours, drying, and sieving the ball-milled glass powder to obtain glass powder with a particle size of 3-5 μm; performing planetary ball milling on crushed mullite chopped fibers for 12 hours by using the stearic acid as the grinding aid and the ethanol as the solvent at a speed of 300 r/min, drying after washing with the ethanol, and sieving with the 100-mesh sieve to obtain the fiber raw materials, where effective fibers accounts for 10% of the total fiber mass, and the aspect ratio of the effective fibers is 2-5.

Ingredient molding: preparing 62 g of glass powder, 38 g of mullite fibers and 240 g of PMMA (80 μm) pore-forming agent, mixing the materials in a three-dimensional mixer for 2 hours, adding the mixed materials into an internal mixer, and adding paraffin wax accounting for 20% of the mass of the mixed materials, polyethylene accounting for 5% of the mass of the mixed materials, and a dispersing aid accounting for 5% of the mass of the mixed materials, performing airtight mixing at the temperature of 180°C for 2 hours, and then producing the green body through the injection molding machine.

Debinding and sintering: raising the temperature to 200°C in 200 minutes, and then raising to 500°C at 0.5°C per minute, where a 2-hour temperature preservation time is set at 240°C, 280°C, 300°C, and 350°C respectively, then raising the temperature to 1250°C at 5°C per minute, keeping the temperature for 30 minutes, and naturally cooling to the room temperature to obtain a porous glass material with a fiber content of 38%, where the micro-morphology of the porous glass is shown in FIG. 12.

The production method for the heating film is the same as Example 7. After testing, the resistance of the heating film obtained in Examples 7-10 is 0.8-1.2 ohms.

COMPARATIVE EXAMPLE 1

The comparative example provides an atomization core, a production method of which includes the following steps:

60 g of glass powder and 40 g of 100 μm ASA pore-forming agent are weighed according to mass, and mixed for 3 h by using the three-dimensional mixer. A green body is produced by injection molding.

The green body debinding process is as follows: debinding is performed in this temperature range: raising the room temperature to 200°C at a uniform speed for 4 hours, and keeping the temperature at 200°C for 4 hours; raising the temperature to 250°C from 200°C at a uniform speed for 4 hours, and keeping the temperature at 250°C for 4 hours; raising the temperature to 300°C from 250°C at a uniform speed for 4 hours, and keeping the temperature at 300°C for 4 hours; raising the temperature to 350°C from 300°C at a uniform speed for 4 hours, and keeping the temperature at 350°C for 4 hours; raising the temperature to 700°C from 350°C at a uniform speed for 6 hours, and keeping the temperature at 700°C for 2 hours. The sintering temperature is 1100°C, and the sintering time is 30 min. The size of the green body after sintering is 4x9x4.4, and the shape is shown in FIG. 8. The sintering temperature is 1100°C. The sintering time is 60 min. The pore structure of the obtained porous glass is shown in FIG. 6.

A thick film resistive heating film is printed on the porous glass substrate by screen printing, using nickel-based alloy (specifically includes elements such as nickel, iron, chromium, copper and molybdenum). The protruding thickness of the thick film is about 60 $\mu$m, and the infiltration thickness is about 30 $\mu$m. The pattern is shown in FIG. 8. The line width is 300 $\mu$m, the line spacing is 600 $\mu$m, the sintering temperature is 1000°C, and the time is 30 min. In this way, the atomization core is obtained.

## COMPARATIVE EXAMPLE 2

The present comparative example provides a porous glass atomization core, a production method of which includes the following steps:

Raw material processing: the same as example 10.

Ingredient molding: preparing 70 g of glass powder, 30 g of mullite fibers and 200 g of PMMA (80 $\mu$m) pore-forming agent, mixing the materials in the three-dimensional mixer for 2 hours, adding the mixed materials into an internal mixer, and adding paraffin wax accounting for 20% of the mass of the mixed materials, polyethylene accounting for 5% of the mass of the mixed materials, and a dispersing aid accounting for 5% of the mass of the mixed materials, performing airtight mixing at the temperature of 180°C for 2 hours, and then producing the green body through the injection molding machine.

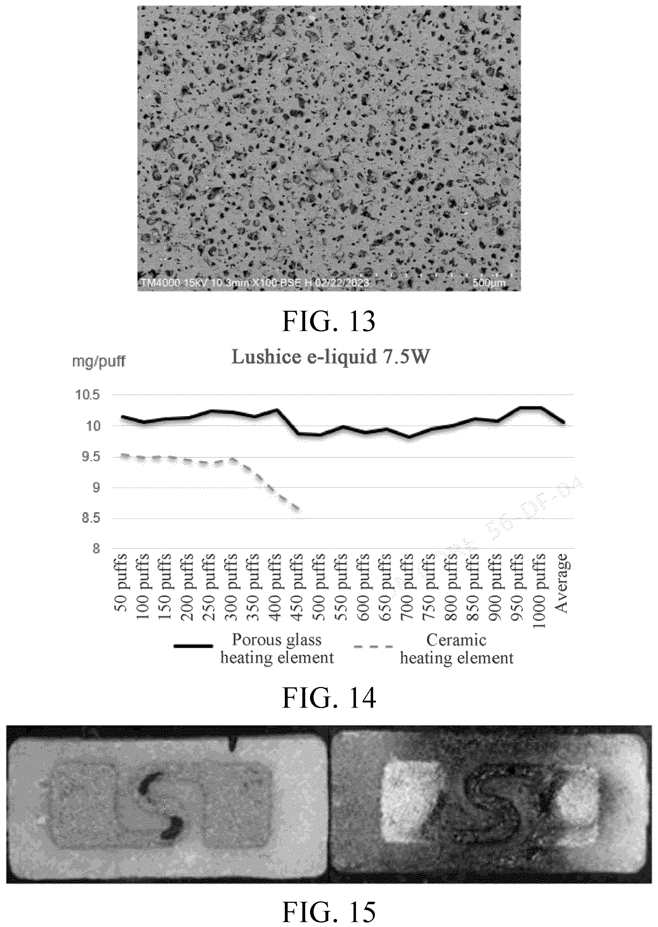

Debinding and sintering: raising the temperature to 200°C in 200 minutes, and then raising to 500°C at 0.5°C per minute, where a 2-hour temperature preservation time is set at 240°C, 280°C, 300°C, and 350°C respectively, then raising the temperature to 1320°C at 5°C per minute, keeping the temperature for 30 minutes, and naturally cooling to the room temperature to obtain a porous glass material with a fiber content of 30%, where the micro-morphology of the porous glass is shown in FIG. 13.

The production method for the heating film is the same as Example 7.

## TEST EXAMPLE

### 1. Porosity and pore size test

According to this application, a drainage method is used for testing the porosity. The dry weight $M_0$ of the porous glass is weighed first, and then the porous glass is placed in a container and submerged with deionized water. A vacuum drying oven is used for vacuumizing for about 20 min to remove the water on the surface of the porous glass. The wet weight Mi is weighed, then the porous glass is placed in deionized water, and the floating weight $M_2$ is weighed. The porosity is obtained by the following formula. Three samples from the same batch are tested and the average value is taken.

$$P = \frac{M_1 - M_0}{M_1 - M_2}.$$

According to this application, an aperture analyzer (bubble point meter) is used for testing the pore size, and based on this, the pore size distribution of the porous glass is determined.

Nitrogen is used for continuously applying pressure to the high-pressure side of the porous glass. When the gas on one side of the sample passes through the sample and reaches infiltration liquid on the other side, bubbles are generated. The maximum pore size of the sample is calculated by this method. By increasing the pressure, smaller pore sizes can be tested. The formula is as follows:

$$d_{max} = 4\gamma \cos\theta / \Delta P$$

where $d_{max}$ is the maximum pore size, $\gamma$ is the surface tension of wetting liquid, $\theta$ is the contact angle between the wetting liquid and the material to be tested, and delta P is the gas pressure difference on both sides of a sample to be tested.

The average pore size is taken as the reference value, and the air pressure test range is 0-300 KPa. Reference standards are GB/T 5249-1985 and ISO 4003-1977.

According to this test method, the "bubble test" method is used for testing. According to the test principle thereof, the pore size data obtained by the test is actually the diameter data of the pore throats of the multi-directional communication pores in the porous glass substrate.

2. E-liquid guiding rate

According to this application, the same atomizing medium is used for testing e-liquid guiding rate. 1 g of mixed solvent of glycerol (VG) and propylene glycol (PG) is weighed, where PG:VG=1:1, the mixed solvent is dropwise added into a container with a diameter of 2 mm, and the liquid level of the solvent is about 1-3 mm lower than the height of the porous sample. After the container is placed under an optical microscope and the porous substrate is placed in the center of the container, the timing is started; and the timing is stopped after observing through the optical microscope that the upper surface of the porous sample is fully filled with the solvent.

3. Tasting test

Taste tasting: a taste tasting group consisting of five people conducts sensory evaluation respectively. The taste evaluation standards mainly include the following evaluation indicators: aroma concentration, irritation (miscellaneous gas), smoke volume, sweetness, throat hit, smoke humidity, aroma reduction degree and satisfaction. The maximum score for each evaluation indicator is 10 points, and each evaluation indicator is scored in units of 0.5 point. Except for irritation (miscellaneous gas) which is negatively scored, the other indicators are positively scored.

The meaning of 8 indicators is: aroma concentration, referring to the perceived richness of the overall aerosol in the nasal and oral cavities; irritation, referring to the irritation sensory experience of smoke after atomization of the atomizing medium in the mouth, throat, and nasal cavity, such as granularity, tingling, and miscellaneous gas; aerosol volume, referring to the total amount of aerosol formed after the atomizing medium is atomized, as well as the amount of aerosol felt through the mouth and visually observed after exhalation; sweetness, referring to the intensity of the sweet taste perceived in the oral cavity and the intensity of the sweet fragrance felt in the nasal cavity after the atomizing medium is atomized; throat hit, referring to the physical sensory intensity of the aerosol hitting the throat after inhalation of the aerosol; aerosol humidity, referring to the degree of wetness or dryness of aerosol particle droplet molecules sensed by the oral and nasal cavities; aroma reduction degree, referring to the mixing uniformity and coordination of the aroma after the atomizing medium is atomized; satisfaction, referring to the short-term brain excitement caused by nicotine being absorbed by the lungs in the same number of puffs, which can be symptoms such as numbness and dizziness in the head.

Table 1 Evaluation standards

| Aroma concentration | Irritation | Aerosol volume | Sweetness | Throat hit | Aerosol humidity | Aroma reduction degree | Satisfaction |
|---|---|---|---|---|---|---|---|
| Rich and full 10 | None 10 | Much, ≥8 | Intense 10 | Strong, ≥8 | Wet 10 | Very good 10 | Intense 10 |
| Relatively rich and full 7.5-9.5 | Tiny 9-9.5 | More 6-7.5 | Relatively intense 7.5-9.5 | Relatively strong 6-7.5 | Relatively wet 7.5-9.5 | Good 7.5-9.5 | Relatively intense 7.5-9.5 |
| Not very rich and full 5.5-7 | Slight 8-8.5 | Moderate 5-5.5 | Moderate 4.5-7 | Moderate 4.5-5.5 | Not very wet 5.5-7 | Relatively good 5.5-7 | Moderate 4.5-7 |
| Weak aroma and not full ≤5 | Moderate 7-7.5 | Less 2.5-4.5 | Slight 2.5-4 | Less 2.5-4 | Not wet, 5 | Moderate 4.5-5 | Slight 2.5-4 |
| | Relatively intense 5.5-6.5 | Little ≤2 | Tiny 0.5-2 | Small ≤2 | | Relatively poor 2.5-4 | Tiny 0.5-2 |
| | Intense ≤5 | | None 0 | | | Poor ≤2 | None 0 |

Atomization cores and ceramic heating elements (Feelm heating element, Shenzhen McWell Technology Co., Ltd.) of the same shape and size produced in the Examples and the Comparative Examples of this application are selected for basic performance testing and smoking.

Table 2

| Number | Porosity (%) | Pore size (diameter of pore throat) (μm) | E-liquid guiding time (s) | Taste score | Aroma reduction degree score |
|---|---|---|---|---|---|
| Ceramic heating element | 55 | 18 | 27 | 6 | 6 |
| Comparative Example 1 | 5 | 6 | / | / | / |
| Comparative Example 2 | 45.5 | 14.3 | 35 | 5 | 5 |
| Example 1 | 62 | 25 | 12 | 7.5 | 8 |
| Example 2 | 67 | 35 | 7 | 8 | 8 |
| Example 3 | 69 | 58 | 6 | 8 | 8 |
| Example 4 | 72 | 57 | 6 | 7 | 7 |
| Example 5 | 60 | 20 | 7 | 8 | 8 |
| Example 6 | 64 | 33 | 8 | 8 | 8 |
| Example 7 | 72.5 | 36 | 6 | 8.5 | 8.5 |
| Example 8 | 74.5 | 42 | 6 | 8.5 | 8.5 |
| Example 9 | 68.3 | 25 | 7 | 8 | 8 |
| Example 10 | 64.3 | 22.5 | 7 | 7.5 | 8 |

In Comparative Example 1, the porosity and pore size are relatively low, during the e-liquid guiding test, the solvent cannot reach the surface of the sample, the e-liquid guiding time cannot be calculated, and the taste and aroma reduction degree cannot be scored.

From the results in the above table, it can be seen that compared with the ceramic heating element, the e-liquid guiding effect of the porous glass atomization core has been greatly improved, and the taste and aroma reduction degree have also been improved to a certain extent.

By comparing the micro-morphologies of FIG. 1 to FIG. 7, in Comparative Example 1, the porous glass is produced by using only the glass, the pore-forming agent and the additive phase. The porous glass has fewer surface pores. The majority of the internal structure is closed-pore. By adding the fiber component as the framework, the pores in the surface and interior are significantly increased, and most of them are open pores. At the same time, it can be seen from the porosity and pore size test data that the porosity of Comparative Example 1 is only 5%, while in the Examples provided by this application, the porosity and pore size of the sample are greatly improved by adding the fiber component as the framework.

In Example 6, some zeolite powder is added as the additive phase. Compared with Example 2, the porosity and pore size of the sample is slightly reduced due to the reduction in the amount of fiber that produces the bridging effect, and the granular zeolite powder can be clearly seen in the cross section. After the zeolite powder is added, the overall taste is not greatly affected, but the strength of the heating element can be improved to a certain extent, and the deformation of the heating element can be alleviated.

In Examples 7-10, no additive phase is added, only the glass powder and fibers are used as the framework. During the production process, the amount of the pore-forming agent added is increased. The pore-forming agent can fully disperse the fibers from each other, so that the effective fibers can easily form a connect structure. When the effective fiber content is sufficient, such as in Examples 7-8, a porous channel structure with high porosity and high communication is formed as a whole. However, when the pore-forming agent content is too high and the fiber (effective fiber) content is relatively low, the product shrinks greatly during the production process, and the porous glass substrate with high porosity cannot be formed. Compared with the examples with additive phases, the porous glass substrate without additive phases has smoother porous channels and surface, and the heating element produced therefrom has a purer smoking taste.

Compared with the existing ceramic heating element, the atomization core produced in the Examples of this application has significantly improved e-liquid guiding rate. At the same time, since the glass is smooth and continuous, the split-phase transmission is reduced, and the aroma reduction degree and the overall taste score are also greatly improved.

A loading test of the porous glass atomization cores produced in Examples 7-10 shows that the attenuation of smoke volume of the porous glass atomization cores during smoking is small, and under the condition of 1000 puffs, the porous glass atomization cores produced in Examples 7-10 have basically no attenuation. The attenuation of smoke volume of Example 7 is shown in FIG. 14. Compared with the commercially available ceramic heating element (Shenzhen Maxwell Technology Co., Ltd., Feelm heating element), the porous glass atomization core of Example 7 is less likely to suffer from carbon deposition after smoking. As shown in FIG. 15, after 400 puffs, the porous glass atomization core (left panel) has significant advantages over the ceramic heating element (right panel) in terms of carbon deposition. After 400 puffs, the test for the commercially available ceramic heating element cannot continue due to severe carbon deposition. Examples 8-10 are close to the effect of Example 7 in terms of carbon deposition, and also have significant advantages over ceramic heating elements, which are not shown one by one.

Obviously, the above examples are merely examples for clear description and are not limitations of the embodiments. For a person of ordinary skill in the art, other different forms of changes or modifications can be made based on the above description. It is not necessary and impossible to list all embodiments exhaustively here. The obvious changes or modifications derived therefrom are still within the protection scope of the present invention.

**Claims**

1.  A production method for a porous glass atomization core, comprising the following steps:

    S1, producing porous glass by adopting the following schemes:

    scheme one: a production method for the porous glass comprising: mixing glass powder, a fiber component, a pore-forming agent and an additive phase to produce a green body, and performing debinding and sintering to obtain the porous glass; or
    scheme two: a production method for the porous glass comprising: mixing glass powder, a fiber component, and a pore-forming agent to produce a green body, and performing debinding and sintering to obtain the porous glass; and

    S2, using the porous glass as a substrate, and arranging a heating unit on the substrate.

2.  The production method for the porous glass atomization core of claim 1, wherein the fiber component has a diameter of 3-30 $\mu$m and a length of 20-500 $\mu$m;
    optionally, the fiber component has a diameter of 10-25 $\mu$m and a length of 20-150 $\mu$m.

3.  The production method for the porous glass atomization core of claim 2, wherein an aspect ratio of the fiber component is 1-10; optionally, the aspect ratio of fibers with a length of 50-150 $\mu$m in the fiber component is 2-5; and/or, wherein a proportion of fibers with a length of 50 $\mu$m or more in the fiber component is 25% or more; optionally, the proportion is 40% or more.

4.  The production method for the porous glass atomization core of any one of claims 1 to 3, wherein, in scheme one, raw materials comprise 15-50% of fiber component by a total mass of the raw materials,
    optionally, by the total mass of the raw materials, the raw materials comprise the following mass percent of components:

    20-70% of glass powder; 15-50% of fiber component; 10-70% of pore-forming agent; 0-50% of additive phase; further optionally, the mass percent of the additive phase is 1-50%; or,
    wherein, in scheme two,
    by a total mass of the glass powder and the fiber component, a proportion of the glass powder is 40-62%, and a proportion of the fiber component is 38-60%, and/or,
    an amount of the pore-forming agent used is 0.3-2.5 times a total mass of the glass powder and the fiber component.

5.  The production method for the porous glass atomization core of any one of claims 1 to 3, wherein in scheme one and scheme two, any one of a casting process, an injection molding process, a dry pressing process and a gel casting process is independently selected to produce the green body, and/or,

    wherein a debinding temperature is 200-800°C, and a debinding time is 5-50h; optionally, the debinding temperature is 200-350°C; and/or,
    wherein a sintering temperature is 900-1250°C or 1180-1320°C, and a sintering time is 10-180min.

6.  The production method for the porous glass atomization core of any one of claims 1 to 3, meeting at least one of the following (1) to (5):

(1) a softening temperature of the glass powder is 600-1200°C,

(2) a particle size of the glass powder is 10 μm or less, optionally, the particle size is 3000 meshes or less,

(3) the fiber component is at least one of silicon carbide fiber, silicon nitride fiber, aluminum silicate fiber, quartz fiber, mullite fiber, alumina fiber, hydroxyapatite fiber, and zirconium oxide fiber,

(4) the pore-forming agent is at least one of carbon powder, polystyrene, polymethyl methacrylate, polylactic acid, polyvinyl alcohol, polyethylene terephthalate, engineering plastics, starch, cellulose, sawdust, and graphite powder,

(5) a particle size of the pore-forming agent is 10-300 μm, optionally, the average particle size of the pore-forming agent is 70-90 μm.

7. The production method for the porous glass atomization core of any one of claims 1 to 6, wherein the heating unit in step S2 is a heating wire, a heating net or a heating film;

optionally, the heating wire or the heating net needs to be embedded in the green body forming process, and is then sintered together with a formed body to obtain a porous glass atomization core;

optionally, as for the heating film, a thick film resistive heating film is printed by screen printing, or a thin film resistive heating film is formed by spraying or magnetron sputtering, the pattern of the heating film is designed, and then the porous glass atomization core is obtained through a sintering step.

8. A porous glass atomization core, using porous glass as a substrate, on which a heating unit is arranged;

wherein, in scheme a, a porosity of the porous glass is 50-70%, and an average pore size is 10-200 μm, or,

wherein, in scheme b, a porosity of the porous glass is 65-80%, and an average pore size is 10-200 μm, optionally, the average pore size is 70-90 μm.

9. The porous glass atomization core of claim 8, wherein the porous glass in scheme a is produced by the production method of scheme one in any one of claims 1 to 7, or,

wherein the porous glass in scheme b is produced by the production method of scheme two in any one of claims 1 to 6.

10. The porous glass atomization core of claim 8 or 9, wherein the porous glass in the scheme b comprises a framework and multi-directional communication pores, the framework comprises a fiber body and a glass body surrounding the fiber body, an average pore size of the multi-directional communication pores is 10-200 μm, and optionally, the average pore size is 70-90 μm.

11. The porous glass atomization core of claim 10, wherein the fiber body has a diameter of 3-30 μm and a length of 20-500 μm;

optionally, the fiber component has a diameter of 10-25 μm and a length of 20-150 μm.

12. The porous glass atomization core of claim 11, wherein an aspect ratio of the fiber body is 1-10, optionally, the aspect ratio of fibers with a length of 50-150 μm in the fiber body is 2-5, and/or,

a proportion of fibers with a length of 50 μm or more in the fiber body is 25% or more, optionally, the proportion is 40% or more.

13. An electronic atomizer, comprising:

the porous glass atomization core produced by the production method of any one of claims 1 to 7, or

the porous glass atomization core of any one of claims 8 to 12.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

<div align="center">

**INTERNATIONAL SEARCH REPORT**

</div>

| International application No. |
|---|
| **PCT/CN2023/095363** |

| A. | CLASSIFICATION OF SUBJECT MATTER |
|---|---|

C03C11/00(2006.01)i; C03B19/06(2006.01)i; C04B38/06(2006.01)i; A24F40/70(2020.01)i

According to International Patent Classification (IPC) or to both national classification and IPC

| B. | FIELDS SEARCHED |
|---|---|

Minimum documentation searched (classification system followed by classification symbols)

C03C, C04B, A24F

Documentation searched other than minimum documentation to the extent that such documents are included in the fields searched

Electronic data base consulted during the international search (name of data base and, where practicable, search terms used)

CNABS, CNTXT, VEN, ENTXT, CNKI, ELSEVIER: 雾化器, 电子烟, 多孔, 玻璃, 纤维, 造孔剂, atomizer, e-cigarette, porous, glass, fiber, pore former

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114804639 A (SHENZHEN SMOORE TECHNOLOGY LTD.) 29 July 2022 (2022-07-29)<br>description, paragraphs 8 and 33 | 1-13 |
| X | CN 114804639 A (SHENZHEN SMOORE TECHNOLOGY LTD.) 29 July 2022 (2022-07-29)<br>description, paragraphs 8-33 | 1-13 |
| X | CN 113173801 A (SHENZHEN GEEKVAPE TECHNOLOGY CO., LTD.) 27 July 2021 (2021-07-27)<br>description, paragraphs 4, 7-12, 21, and 33 | 1-13 |
| A | CN 113387572 A (SHENZHEN GEEKVAPE TECHNOLOGY CO., LTD.) 14 September 2021 (2021-09-14)<br>entire document | 1-13 |
| A | WO 2021163922 A1 (O-NET AUTOMATION TECHNOLOGY (SHENZHEN) LTD.) 26 August 2021 (2021-08-26)<br>entire document | 1-13 |

☐ Further documents are listed in the continuation of Box C.    ☑ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| **14 September 2023** | **20 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/095363**

| Patent document cited in search report | | | Publication date (day/month/year) | Patent family member(s) | | | Publication date (day/month/year) |
|---|---|---|---|---|---|---|---|
| CN | 114804639 | A | 29 July 2022 | None | | | |
| CN | 113173801 | A | 27 July 2021 | CN | 113173801 | B | 13 December 2022 |
| CN | 113387572 | A | 14 September 2021 | None | | | |
| WO | 2021163922 | A1 | 26 August 2021 | None | | | |

Form PCT/ISA/210 (patent family annex) (July 2022)

**REFERENCES CITED IN THE DESCRIPTION**

**Patent documents cited in the description**

- CN 202210579323